# EUROPEAN PATENT SPECIFICATION

(11) **EP 3 434 451 B1**
(45) Date of publication and mention of the grant of the patent: **01.04.2020**
(21) Application number: 18176068.7
(22) Date of filing: 05.06.2018
(51) Int. Cl.: B29C 64/393, B29C 64/40, B29C 64/106

(54) **THREE-DIMENSIONAL PRINTING DEVICE AND THREE-DIMENSIONAL PRINTING METHOD**
VORRICHTUNG ZUM DREIDIMENSIONALEN DRUCKEN UND VERFAHREN ZUM DREIDIMENSIONALEN DRUCKEN
DISPOSITIF ET PROCÉDÉ D'IMPRESSION TRIDIMENSIONNELLE

(30) Priority: 24.07.2017 CN 201710605216
(43) Date of publication of application: 30.01.2019
(73) Proprietor: XYZprinting, Inc., New Taipei City 22201 (TW); Kinpo Electronics, Inc., New Taipei City 22201 (TW)
(72) Inventor: Ho, Kwan, New Taipei City 22201 (TW); Yang, Yu-Jie, New Taipei City 22201 (TW)
(74) Representative: 2K Patentanwälte Blasberg Kewitz & Reichel

(56) References cited:
- EP-A1- 3 100 847
- US-A1- 2016 023 403
- US-A1- 2017 144 379

## Description

### BACKGROUND OF THE INVENTION

### Field of the Invention

The invention relates to a printing technique, and particularly relates to a three-dimensional (3D) printing device and a 3D printing method.

### Description of Related Art

Along with progress of computer-aided manufacturing (CAM), manufacturing industry has developed a three-dimensional (3D) printing technology, by which an original design conception can be quickly manufactured. The 3D printing technology is actually a general designation of a series of rapid prototyping (RP) techniques, and a basic principle thereof is additive manufacturing on a printing platform, where a RP machine is used to sequentially form a plurality layers of sliced objects on the printing platform in an X-Y plane through scanning, so as to stack the sliced object to form a 3D object.

Generally, since the printing platform of the 3D printing device is probably inclined or has a phenomenon of surface unevenness, a carrying surface of the printing platform is probably not a horizontal plane. Further, if the carrying surface of the printing platform is not the horizontal plane, the printed 3D object is different from an actual expectation, and printing quality and printing yield of the 3D printing device are decreased. However, the conventional 3D printing device is adjusted through a manual manner via user's naked eyes, so that the conventional horizontal calibration process takes a lot of time and the effect of calibration is limited. Therefore, it is one of the most important issues to enable the 3D printing device to automatically determine a level degree of the printing platform, and perform an automatic calibration and compensation operation thereon. Such devices and methods are e.g. known from EP 3 100 847 A1, which discloses a three-dimensional printing apparatus and a method for calibrating printing inaccuracies thereof, and from US 2016/0023403 A1, which discloses a method for calibrating an additive fabrication device.

### SUMMARY OF THE INVENTION

The invention is directed to a 3D printing device as specified in claim 1 and a 3D printing method as specified in claim 7, which are adapted to automatic compensate inclination of a printing platform, so as to print a 3D object on a horizontal plane, and effectively improve printing quality. Advantageous embodiments are the subject of the dependent claims.

The invention provides a 3D printing device including a printing platform, a printing head, a sensor and a controller. The printing platform includes a carrying surface. The printing head is disposed above the printing platform. The sensor is disposed above the printing platform. The controller is coupled to the printing head and the sensor. The controller is configured to analyze a first layer slicing data of a 3D object to obtain a printing range. The controller is configured to operate the sensor to sense a plurality of sensing points corresponding to the printing range on the carrying surface of the printing platform, so as to obtain a plurality of sensing parameters corresponding to the sensing points. The controller is configured to determine whether the printing platform is inclined according to the sensing parameters. If the printing platform is inclined, the controller is configured to determine an object shape of a compensation object according to the printing range and the sensing parameters.

Furthermore, the controller is configured to operate the printing head to pre-print the compensation object on the carrying surface of the printing platform before printing the 3D object.

In an embodiment of the invention, the compensation object forms a horizontal plane on the carrying surface, and the printing head is configured to print the 3D object on the horizontal plane.

In an embodiment of the invention, the compensation object is formed by sequentially stacking multiple layers of sub-objects, and the controller is configured to respectively calculate a plurality of sub-object shapes and a plurality of sub-object heights of the multiple layers of sub-objects according to the printing range and the sensing parameters.

In an embodiment of the invention, the sensing parameters are a plurality of height values, and the controller is configured to calculate the height values according to a slope formula and a predetermined pitch to obtain a plurality of height differences. The controller is configured to determine the sub-object shapes and the sub-object heights of the multiple layers of sub-objects according to the slope formula, the predetermined pitch and the height differences.

In an embodiment of the invention, an area of each layer of sub-object of the multiple layers of sub-objects is increased layer-by-layer from a first layer sub-object to a last layer sub-object.

In an embodiment of the invention, the last layer sub-object of the multiple layers of sub-objects is a partially filled structure.

In an embodiment of the invention, the printing range forms a rectangle region on the carrying surface, and a range of a sliced object printed by the printing head according to the first layer slicing data under control of the controller does not exceed the printing range.

In an embodiment of the invention, the sensing points are respectively located at four vertex positions of the rectangle region.

The invention provides a 3D printing method adapted to a 3D printing device. The 3D printing method includes: analyzing a first layer slicing data of a 3D object to obtain a printing range; operating a sensor to sense a plurality of sensing points corresponding to the printing range on a carrying surface of a printing platform, so as to obtain a plurality of sensing parameters corresponding to the sensing points; determining whether the printing platform is inclined according to the sensing parameters; and if the printing platform is inclined, determining an object shape of a compensation object according to the printing range and the sensing parameters.

Furthermore, the 3D printing method includes: operating the printing head to pre-print the compensation object on the carrying surface of the printing platform before printing the 3D object.

In an embodiment of the invention, the compensation object forms a horizontal plane on the carrying surface, and the 3D printing method further includes: operating the printing head to print the 3D object on the horizontal plane.

In an embodiment of the invention, the compensation object is formed by sequentially stacking multiple layers of sub-objects, and the step of determining the object shape of the compensation object according to the printing range and the sensing parameters includes: respectively calculating a plurality of sub-object shapes and a plurality of sub-object heights of the multiple layers of sub-objects according to the printing range and the sensing parameters.

In an embodiment of the invention, the sensing parameters are a plurality of height values, and the step of calculating the sub-object shapes and the sub-object heights of the multiple layers of sub-objects includes: calculating the height values according to a slope formula and a predetermined pitch to obtain a plurality of height differences; and determining the sub-object shapes and the sub-object heights of the multiple layers of sub-objects according to the slope formula, the predetermined pitch and the height differences.

In an embodiment of the invention, an area of each layer of sub-object of the multiple layers of sub-objects is increased layer-by-layer from a first layer sub-object to a last layer sub-object.

In an embodiment of the invention, the last layer sub-object of the multiple layers of sub-objects is a partially filled structure.

In an embodiment of the invention, the printing range forms a rectangle region on the carrying surface, and a range of a sliced object printed by the printing head according to the first layer slicing data does not exceed the printing range.

In an embodiment of the invention, the sensing points are respectively located at four vertex positions of the rectangle region.

According to the above description, the 3D printing device and the 3D printing method of the invention are adapted to automatically determine whether the printing platform is inclined, and when the printing platform is inclined, the 3D printing device pre-prints the compensation object, such that the 3D object is printed on the horizontal plane formed by the compensation object. Therefore, the 3D printing device and the 3D printing method of the invention automatically compensate and correct the inclination of the printing platform to achieve good printing quality.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block schematic diagram of a 3D printing device according to an embodiment of the invention.
FIG. 2 is a schematic diagram of a 3D printing device according to an embodiment of the invention.
FIG. 3 is a schematic diagram of a 3D printing device according to another embodiment of the invention.
FIG. 4 is a schematic diagram of first layer slicing data according to an embodiment of the invention.
FIG. 5 is a schematic diagram of sensing a plurality of sensing points on a printing platform according to an embodiment of the invention.
FIGs. 6A-6F are schematic diagrams of multiple layers of sub-objects of a compensation object according to an embodiment of the invention.
FIG. 7 is a schematic diagram of a compensation object according to an embodiment of the invention.
FIG. 8 is a flowchart illustrating a 3D printing method according to an embodiment of the invention.

### DESCRIPTION OF EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

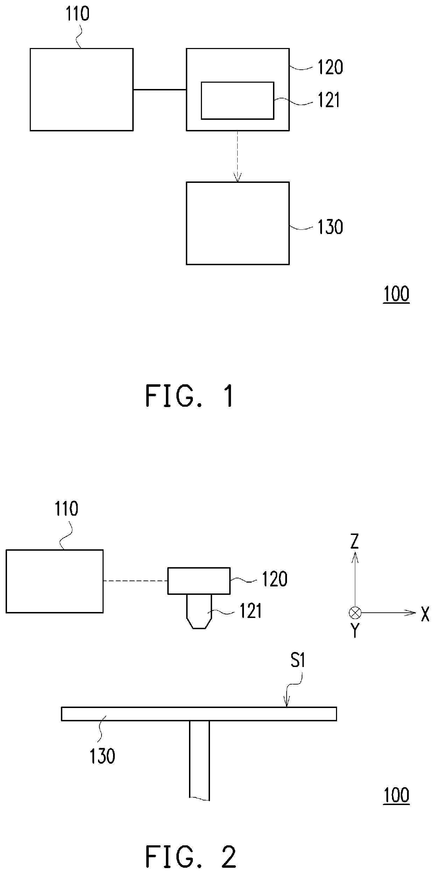

FIG. 1 is a block schematic diagram of a 3D printing device according to an embodiment of the invention. Referring to FIG. 1, the 3D printing device 100 includes a controller 110, a printing head 120, a sensor 121 and a printing platform 130. In the present embodiment, the controller 110 is coupled to the printing head 120 and the sensor 121, and the printing head 120 and the sensor 121 are disposed above the printing platform 130. In the present embodiment, the sensor 121 may be disposed in the printing head 120. Therefore, when the sensor 121 and the printing head 120 move under control, the sensor 121 and the printing head 120 move together, such that control of the printing head 120 and the sensor 121 is simplified, and the sensor 121 may equivalently reflect a status of the printing head 120. However, in another embodiment, the sensor 121 and the printing head 120 may also be juxtaposed in mechanism. Alternatively, the sensor 121 may be independently disposed above the printing platform 130, and is coupled to the controller 110, though the sensor 121 is separated from the printing head 120, and independently moves under control.

In the present embodiment, the controller 110 controls the printing head 120 to execute a printing operation, and controls the sensor 121 to sense a plurality of sensing points on the printing platform 130, so as to obtain a plurality of sensing parameters. In the present embodiment, the sensor 121 is, for example, an infrared sensor or an ultrasonic sensor, etc., though the invention is not limited thereto. When the sensor 121 is respectively moved to positions vertically above the sensing points, the sensor 121 may individually sense a distance between the sensor 121 and the sensing points on the printing platform 130, or sense a plurality of height values or height differences of the sensing points relative to a horizontal plane, such that the controller 110 may determine an inclination degree of the printing platform 130 according to the sensing parameters.

In the present embodiment, the controller 110 may include a processing chip, which is, for example, a central processing unit (CPU), or other programmable general purpose or special purpose microprocessor, a digital signal processor (DSP), a programmable controller, an application specific integrated circuits (ASIC), a programmable logic device (PLD), other similar processing circuit or a combination of the above devices. Moreover, in the present embodiment, the controller 110 may further include or externally connect a storage device. The storage device is, for example, a dynamic random access memory (DRAM), a flash memory or a non-volatile random access memory (NVRAM), etc. In the present embodiment, the storage device may be used for storing data and parameters of the embodiments of the invention, and may further store a plurality of calculating, processing or analyzing modules for being read and executed by the controller 110, such that the controller 110 may implement calculating, processing or analyzing operations of the embodiments of the invention.

FIG. 2 is a schematic diagram of the 3D printing device according to an embodiment of the invention. Referring to FIG. 2, in the present embodiment, the coordinate axes X, Y, Z are perpendicular to each other. The coordinate axes X and Y are, for example, axial directions of horizontal directions, and the coordinate axis Z is, for example, an axial direction of a vertical direction. The 3D printing device 100 of the present embodiment may be placed in a space formed by the coordinate axes X, Y, Z. In the present embodiment, the printing platform 130 includes a carrying surface S1. The controller 110 may operate the printing head 120 to move along the horizontal direction or the vertical direction. The controller 110 may operate the printing head 120 to execute a 3D printing operation on the carrying surface S1 of the printing platform 130, and control the sensor 121 to sense a plurality of sensing points on the carrying surface S1 of the printing platform 130, so as to obtain a plurality of sensing parameters.

In the present embodiment, the 3D printing operation refers to that the controller 110 controls a moving path of the printing head 120 according to a plurality of slicing information of 3D model information, and operates the printing head 120 to print at least one sliced object on the carrying surface S1 of the printing platform 130. In the present embodiment, the 3D printing device 100 may sequentially print multiple layers of sliced objects to stack the sliced objects on the carrying surface S1 of the printing platform 130 to form a 3D objects. In the present embodiment, the 3D model information may be a 3D image file, which may be constructed by a computer host by using computer-aided design (CAD) or animation modeling software. In the present embodiment, the 3D model in the 3D image file may be sliced into a plurality of slicing data by the computer host, and the 3D printing device 100 may sequentially print the sliced objects according to the slicing data, where the slicing data is, for example, a two-dimensional (2D) image file.

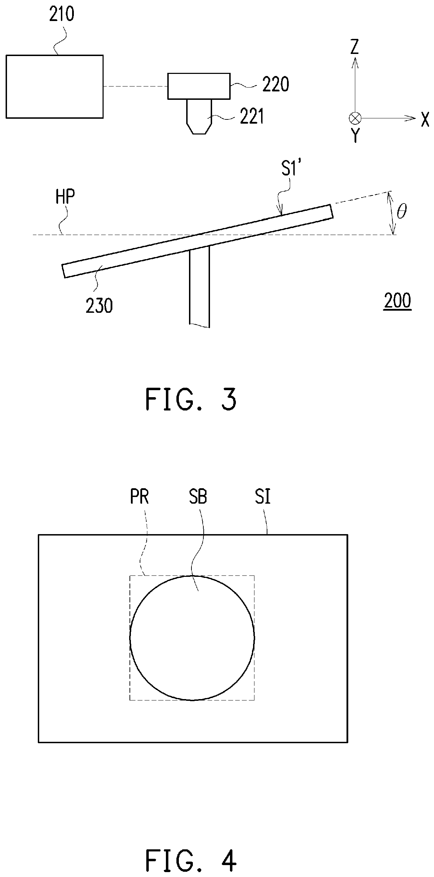

FIG. 3 is a schematic diagram of a 3D printing device according to another embodiment of the invention. Referring to FIG. 3, the controller 210 of the 3D printing device 200 may operate the printing head 220 to move along a horizontal direction or a vertical direction, and the 3D printing device 200 has been adjusted after being manufactured, where a moving plane of the printing head 220 along the horizontal direction is substantially parallel to a horizontal plane HP. The controller 210 may operate the printing head 220 to execute the 3D printing operation on the carrying surface S1' of the printing platform 230, and may control the sensor 221 to sense a plurality of sensing points on the carrying surface S1' of the printing platform 230, so as to obtain a plurality of sensing parameters. However, in the present embodiment, if the carrying surface S1' of the printing platform 230 has a tilt angle θ relative to the horizontal plane HP, the 3D object directly printed on the carrying surface S1' by the 3D printing device 200 is skewed or has an error, which influences the printing quality. Therefore, in the present embodiment, the controller 210 operates the printing head 220 to pre-print a compensation object on the carrying surface S1' of the printing platform 230 before printing the 3D object, and the compensation object forms a horizontal plane on the carrying surface S1'. Moreover, the controller 210 operates the printing head 220 to continually print the 3D object on the horizontal plane formed by the compensation object.

FIG. 4 is a schematic diagram of first layer slicing data according to an embodiment of the invention. Referring to FIG. 3 and FIG. 4, in FIG. 3, the first layer slicing data SI may be a 2D image file, and the image file includes a first layer sliced object SB of the 3D object. In the present embodiment, before the compensation object is printed, the controller 210 analyzes the first layer slicing data SI of the 3D object to obtain a printing range PR. Namely, the 3D printing device 200 determines the printing range PR of the compensation object according to a contour range of the first layer sliced object SB of the 3D object. In the present embodiment, the printing range PR forms a rectangle region on the carrying surface S1', and after printing of the compensation object is completed, a range of the sliced object SB printed by the printing head according to the first layer slicing data SI under control of the controller 210 does not exceed the printing range PR. However, the printing range PR of the invention is not limited to FIG. 4. In an embodiment, a size and a shape of the printing range PR may be determined according to a shape of the 3D object, or predetermined by the user.

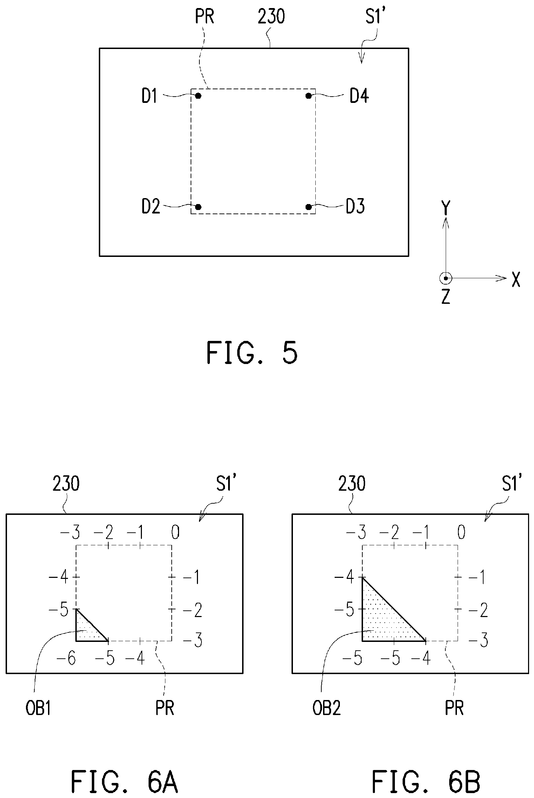

FIG. 5 is a schematic diagram of sensing a plurality of sensing points on a printing platform according to an embodiment of the invention. Referring to FIG. 3 and FIG. 5, in the present embodiment, after the 3D printing device 200 determines the printing range PR, the controller 210 operates the printing head 220 and the sensor 221 to sense a plurality of sensing points D1-D4 corresponding to the printing range PR on the carrying surface S1' of the printing platform 230, so as to obtain a plurality of sensing parameters corresponding to the sensing points D1-D4. However, the quantity and the sensing positions of the sensing points are not limited to that shown in FIG. 5. In an embodiment, the quantity and the sensing positions of the sensing points may be determined according to the printing range, or preset by the user.

In the present embodiment, the sensing parameters sensed by the sensor 221 are a plurality of height values. The controller 210 may respectively calculate the height values based on a slope formula and a predetermined pitch to obtain a plurality of height differences, and the controller 210 may determine a plurality of sub-object shapes and a plurality of sub-object heights of the multiplayer of sub-objects of the compensation object according to the slope formula, the predetermined pitch and the height differences. To be specific, the 3D printing device 200 may take a position of the highest point of the printing range PR as a reference, and calculate height differences between other positions and the reference along the printing range PR according to the predetermined pitch. Therefore, the 3D printing device 200 may determine a quantity of the sub-objects of the compensation object according to a distribution status of the height differences, and further design the sub-object shapes and the sub-object heights.

FIGs. 6A-6F are schematic diagrams of the multiple layers of sub-objects of the compensation object according to an embodiment of the invention. Referring to FIGs. 6A-6F, in the present embodiment, the 3D printing device 200 may sequentially print multiplayer of sub-objects OB1-OB6 on the carrying surface S1' of the printing platform 230, and the sub-objects OB1-OB6 are sequentially stacked to form the compensation object. In FIGs. 6A-6F, the controller 210 may set the predetermined pitch as one unit pitch of 1 cm, 2 cm, or 5 cm, though the invention is not limited thereto. Therefore, in FIGs. 6A-6F, the controller 210 may mark a plurality of height differences (for example, digits such as 0, -1, -2, ..., -6 marked on each grid point of the printing range PR of FIG. 6A) along the printing range PR based on the predetermined pitch (for example, a space between two adjacent grid points on the printing range PR of FIG. 6A), so as to operate the printing head 220 to sequentially print the sub-objects OB1-OB6 according to a variation trend of the height differences.

To be specific, in FIG. 6A, the controller 210 may determine a region with a relative lowest height in the printing range PR on the carrying surface S1' of the printing platform 230, where such region is, for example, a region formed by the height differences marked as "-5", "-5" and "-6". In the present embodiment, the controller 210 may operate the printing head 220 to print the sub-object OB1 on such region.

In FIG. 6B, since the sub-object OBI has been printed in the printing range PR on the carrying surface S1' of the printing platform 230, the sub-object OBI has compensated a height of partial region in the printing range PR. Namely, the controller 210 then determines a region with the relative lowest height in the printing range PR on the carrying surface S1' of the printing platform 230, where such region is, for example, a region formed by the height differences marked as "-4" and "-5". In the present embodiment, the controller 210 may operate the printing head 220 to print the sub-object OB2 on such region.

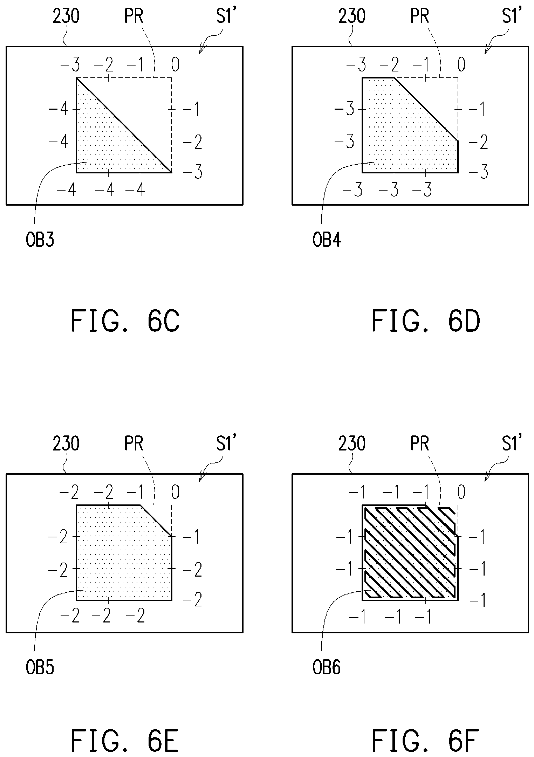

In FIG. 6C, since the sub-objects OB1, OB2 have been printed in the printing range PR on the carrying surface S1' of the printing platform 230, the sub-objects OBI, OB2 have compensated a height of partial region in the printing range PR. Namely, the controller 210 then determines a region with the relative lowest height in the printing range PR on the carrying surface S1' of the printing platform 230, where such region is, for example, a region formed by the height differences marked as "-3" and "-4". In the present embodiment, the controller 210 may operate the printing head 220 to print the sub-object OB3 on such region.

In FIG. 6D, since the sub-objects OBI, OB2, OB3 have been printed in the printing range PR on the carrying surface S1' of the printing platform 230, the sub-objects OB1, OB2, OB3 have compensated a height of partial region in the printing range PR. Namely, the controller 210 then determines a region with the relative lowest height in the printing range PR on the carrying surface S1' of the printing platform 230, where such region is, for example, a region formed by the height differences marked as "-2" and "-3". In the present embodiment, the controller 210 may operate the printing head 220 to print the sub-object OB4 on such region.

In FIG. 6E, since the sub-objects OB1, OB2, OB3, OB4 have been printed in the printing range PR on the carrying surface S1' of the printing platform 230, the sub-objects OB1, OB2, OB3, OB4 have compensated a height of partial region in the printing range PR. Namely, the controller 210 then determines a region with the relative lowest height in the printing range PR on the carrying surface S1' of the printing platform 230, where such region is, for example, a region formed by the height differences marked as "-1" and "-2". In the present embodiment, the controller 210 may operate the printing head 220 to print the sub-object OB5 on such region.

In FIG. 6F, since the sub-objects OB1, OB2, OB3, OB4, OB5 have been printed in the printing range PR on the carrying surface S1' of the printing platform 230, the sub-objects OB1, OB2, OB3, OB4, OB5 have compensated a height of partial region in the printing range PR. Namely, the controller 210 then determines a region with the relative lowest height in the printing range PR on the carrying surface S1' of the printing platform 230, where such region is, for example, a region formed by the height differences marked as "-0" and "-1". In the present embodiment, the controller 210 may operate the printing head 220 to print the sub-object OB6 on such region. In the present embodiment, the sub-object OB6 is the last layer sub-object of the compensation object, and the sub-object OB6 may be a partially filled structure as that shown in FIG. 6F. To be specific, since the 3D printing device 200 may continually print the 3D object on the compensation object, in order to easily separate the 3D object from the compensation object after the 3D printing operation, the sub-object OB6 be designed into a partially filled structure. However, the partially filled structure of the sub-object OB6 is not limited to a structure type shown in FIG. 6F. In an embodiment, the partially filled structure of the sub-object OB6 may be designed according to a shape, a size of the 3D object or designed by the user.

In the embodiment of FIGs. 6A-6F, the heights of the sub-objects OB1-OB6 printed by the 3D printing device 200 are the same. The controller 210 may determine shapes and heights of the sub-objects OB1-OB6 according to the slope formula, the predetermined pitch and the height differences. Moreover, the height differences may be calculated according to a trigonometric function formula of the related technical field, and enough instructions and recommendations thereof may be obtained from the ordinary knowledge of the related technical field, detailed description thereof is not repeated. However, in an embodiment, the sub-objects OB1-OB6 may have different heights, which is not limited by the invention.

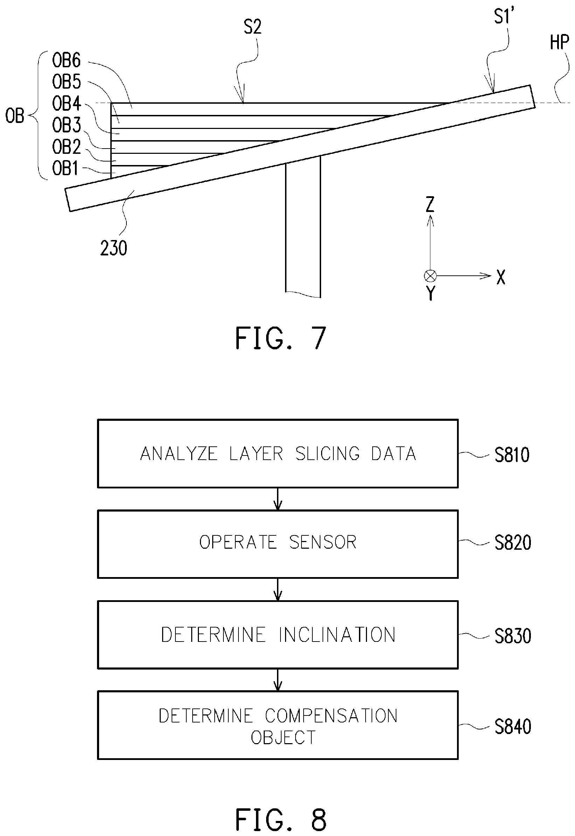

FIG. 7 is a schematic diagram of a compensation object according to an embodiment of the invention. Referring to FIG. 3 and FIG. 7, in the present embodiment, the compensation object OB may be formed by sequentially stacking a plurality of the sub-objects OB1-OB6, and an area of each layer of sub-object of the sub-objects OB1-OB6 is increased layer-by-layer from the first layer sub-object OB1 to the last layer sub-object OB6. In the present embodiment, the compensation object OB forms another carrying surface S2 on the carrying surface S1' of the printing platform 230, and the carrying surface S2 is parallel to the horizontal plane HP. Namely, since the carrying surface S1' of the printing platform 230 is not the horizontal plane, the 3D printing device 200 of the present embodiment may pre-print the compensation object on the carrying surface S1' of the printing platform 230 before printing the 3D object, such that the compensation object forms the other carrying surface S2 on the carrying surface S1', and the carrying surface S2 is a horizontal plane. Therefore, when the controller 210 operates the printing head 220 to continually print the 3D object on the carrying surface S2 formed by the compensation object, the 3D object may be correctly printed on the horizontal plane.

FIG. 8 is a flowchart illustrating a 3D printing method according to an embodiment of the invention. Referring to FIG. 1 and FIG. 8, the 3D printing method of the present embodiment is at least adapted to the 3D printing device 100 of FIG. 1. In step S810, the controller 110 analyzes a first layer slicing data of the 3D object to obtain a printing range. In step S820, the controller 110 operates the sensor 121 to sense a plurality of sensing points corresponding to the printing range on the carrying surface of the printing platform 130, so as to obtain a plurality of sensing parameters corresponding to the sensing points. In step S830, the controller 110 determines whether the printing platform 130 is inclined according to the sensing parameters. In step S840, If the printing platform 130 is inclined, the controller 110 determines an object shape of the compensation object according to the printing range and the sensing parameters. Although the so-called "object shape" of the compensation object is probably deconstructed to include an appearance sensory feeling such as a geometric shape or a height or an angle, etc., or measured parameters, for example, in the aforementioned embodiment, the compensation object may be formed by stacking multiple layers of sub-objects, and the multiple layers of sub-objects respectively include the sub-object shapes and sub-object heights. However, the term "object shape" of the compensation object is not particularly used for emphasizing the same, but is to compensate the inclination of the printing platform by using the compensation object, such that the 3D object may be correctly printed on the horizontal plane. Therefore, the 3D printing method of the present embodiment may automatically correct the inclination of the printing platform, so as to correctly print the 3D object on the horizontal plane.

Moreover, enough instructions and recommendations of related implementation details and related device features of the 3D printing device 100 of the present embodiment may be acquired from the embodiments of FIG. 1 to FIG. 7, and detail thereof is not repeated.

In summary, the 3D printing device and the 3D printing method of the invention are adapted to automatically determine whether the printing platform is inclined, and when the printing platform is inclined, the 3D printing device pre-prints at least one layer sub-object to form the compensation object, such that the 3D object is printed on the horizontal plane formed by the compensation object. Moreover, the last layer sub-object of the sub-objects may be designed as a partially filled structure, so as to facilitate separating the 3D object from the compensation object. Therefore, the 3D printing device and the 3D printing method of the invention automatically compensate and correct the inclination of the printing platform to achieve good printing quality.

## Claims

1. A three-dimensional printing device (100, 200), comprising:
a printing platform (130, 230), comprising a carrying surface (S1, S1');
a printing head (120, 220), disposed above the printing platform (130, 230);
a sensor (121, 221), disposed above the printing platform (130, 230); and
a controller (110, 210), coupled to the printing head (120, 220) and the sensor (121, 221),
wherein the controller (110, 210) is configured to:
analyze a first layer slicing data (SI) of a three-dimensional object to obtain a printing range (PR), and operate the sensor (121, 221) to sense a plurality of sensing points (D1, D2, D3, D4) corresponding to the printing range (PR) on the carrying surface (S1, S1') of the printing platform (130, 230), so as to obtain a plurality of sensing parameters corresponding to the sensing points (D1, D2, D3, D4),
determine whether the printing platform (130, 230) is inclined according to the sensing parameters,
if the printing platform 15 (130, 230) is inclined, determine an object shape of a compensation object (OB) according to the printing range (PR) and the sensing parameters, and
operate the printing head (120, 220) to pre-print the compensation object (OB) on the carrying surface (S1, S1') of the printing platform (130, 230) before printing the three-dimensional object.

2. The three-dimensional printing device (100, 200) as claimed in claim 1, wherein the compensation object (OB) forms a horizontal plane (HB) on the carrying surface (S1, S1'), and the printing head (120, 220) is configured to print the three-dimensional object on the horizontal plane (HB).

3. The three-dimensional printing device (100, 200) as claimed in claim 1, wherein the compensation object (OB) is formed by sequentially stacking multiple layers of sub-objects (OB1, OB2, OB3, OB4, OB5, OB6), and the controller (110, 210) is configured to respectively calculate a plurality of sub-object shapes and a plurality of sub-object heights of the multiple layers of sub-objects (OB1, OB2, OB3, OB4, OB5, OB6) according to the printing range (PR) and the sensing parameters.

4. The three-dimensional printing device (100, 200) as claimed in claim 3, wherein the sensing parameters are a plurality of height values, and the controller (110, 210) is configured to calculate the height values according to a slope formula and a predetermined pitch to obtain a plurality of height differences, and to determine the sub-object shapes and the sub-object heights of the multiple layers of sub-objects (OB1, OB2, OB3, OB4, OB5, OB6) according to the slope formula, the predetermined pitch and the height differences.

5. The three-dimensional printing device (100, 200) as claimed in claim 3, wherein an area of each layer of sub-object of the multiple layers of sub-objects (OB1, OB2, OB3, OB4, OB5, OB6) is increased layer-by-layer from a first layer sub-object to a last layer sub-object, or the last layer sub-object of the multiple layers of sub-objects (OB1, OB2, OB3, OB4, OB5, OB6) is a partially filled structure.

6. The three-dimensional printing device (100, 200) as claimed in claim 1, wherein the printing range (PR) forms a rectangle region on the carrying surface (S1, S1'), and a range of a sliced object (SB) printed by the printing head (120, 220) according to the first layer slicing data (SI) under control of the controller (110, 210) does not exceed the printing range (PR).

7. A three-dimensional printing method, adapted to a three-dimensional printing device (100, 200), and comprising:
analyzing a first layer slicing data (SI) of a three-dimensional object to obtain a printing range (PR);
operating a sensor (121, 221) to sense a plurality of sensing points (D1, D2, D3, D4) corresponding to the printing range (PR) on a carrying surface (S1, S1') of a printing platform (130, 230), so as to obtain a plurality of sensing parameters corresponding to the sensing points (D1, D2, D3, D4);
determining whether the printing platform (130, 230) is inclined according to the sensing parameters;
if the printing platform (130, 230) is inclined, determining an object shape of a compensation object (OB) according to the printing range (PR) and the sensing parameters, and
operating the printing head (120, 220) to pre-print the compensation object (OB) on the carrying surface (S1, S1') of the printing platform (130, 230) before printing the three-dimensional object.

8. The three-dimensional printing method as claimed in claim 7, wherein the compensation object (OB) forms a horizontal plane (HB) on the carrying surface (S1, S1'), and the three-dimensional printing method further comprises:
operating the printing head (120, 220) to print the three-dimensional object on the horizontal plane (HB).

9. The three-dimensional printing method as claimed in claim 7, wherein the compensation object (OB) is formed by sequentially stacking multiple layers of sub-objects (OB1, OB2, OB3, OB4, OB5, OB6), and the step of determining the object shape of the compensation object (OB) according to the printing range (PR) and the sensing parameters comprises:
respectively calculating a plurality of sub-object shapes and a plurality of sub-object heights of the multiple layers of sub-objects (OB1, OB2, OB3, OB4, OB5, OB6) according to the printing range (PR) and the sensing parameters.

10. The three-dimensional printing method as claimed in claim 9, wherein the sensing parameters are a plurality of height values, and the step of calculating the sub-object shapes and the sub-object heights of the multiple layers of sub-objects (OB1, OB2, OB3, OB4, OB5, OB6) comprises:
calculating the height values according to a slope formula and a predetermined pitch to obtain a plurality of height differences; and
determining the sub-object shapes and the sub-object heights of the multiple layers of sub-objects (OB1, OB2, OB3, OB4, OB5, OB6) according to the slope formula, the predetermined pitch and the height differences.

11. The three-dimensional printing method as claimed in claim 9, wherein an area of each layer of sub-object of the multiple layers of sub-objects (OB1, OB2, OB3, OB4, OB5, OB6) is increased layer-by-layer from a first layer sub-object to a last layer sub-object, or the last layer sub-object of the multiple layers of sub-objects (OB1, OB2, OB3, OB4, OB5, OB6) is a partially filled structure.

12. The three-dimensional printing method as claimed in claim 7, wherein the printing range (PR) forms a rectangle region on the carrying surface (S1, S1'), and a range of a sliced object (SB) printed by the printing head (120, 220) according to the first layer slicing data (SI) does not exceed the printing range (PR).

## Patentansprüche

1. Eine dreidimensionale Druckvorrichtung (100, 200), umfassend:
eine Druckplattform (130, 230), die eine Tragfläche (S1, S1') aufweist;
einen Druckkopf (120, 220), der über der Druckplattform (130, 230) angeordnet ist;
einen Sensor (121, 221), der über der Druckplattform (130, 230) angeordnet ist; und
ein Steuergerät (110, 210), das mit dem Druckkopf (120, 220) und dem Sensor (121, 221) gekoppelt ist,
wobei die Steuerung (110, 210) konfiguriert ist:
eine erste Schicht von Schneiddaten (SI) eines dreidimensionalen Objekts zu analysieren, um einen Druckbereich (PR) zu erhalten, und den Sensor (121, 221) zu betreiben, um eine Vielzahl von Abtastpunkten (D1, D2, D3, D4) entsprechend dem Druckbereich (PR) auf der tragenden Oberfläche (S1, S1') der Druckplattform (130, 230) abzutasten, um eine Vielzahl von Abtastparametern entsprechend den Abtastpunkten (D1, D2, D3, D4) zu erhalten,
zu bestimmen, ob die Druckplattform (130, 230) entsprechend den Sensorparametern geneigt ist,
wenn die Druckplattform 15 (130, 230) geneigt ist, eine Objektform eines Kompensationsobjekts (OB) entsprechend dem Druckbereich (PR) und den Erfassungsparametern zu bestimmen, und
den Druckkopf (120, 220) zu betätigen, um das Kompensationsobjekt (OB) vor dem Bedrucken des dreidimensionalen Objekts auf der Auflagefläche (S1, S1') der Druckplattform (130, 230) vorzudrucken.

2. Dreidimensionale Druckvorrichtung (100, 200) nach Anspruch 1, wobei das Kompensationsobjekt (OB) auf der Tragfläche (S1, S1') eine horizontale Ebene (HB) bildet und der Druckkopf (120, 220) zum Bedrucken des dreidimensionalen Objekts in der horizontalen Ebene (HB) ausgebildet ist.

3. Dreidimensionale Druckvorrichtung (100, 200) nach Anspruch 1, wobei das Kompensationsobjekt (OB) durch sequentielles Stapeln mehrerer Schichten von Teilobjekten (OB1, OB2, OB3, OB4, OB5, OB6) gebildet wird, und die Steuerung (110, 210) dazu ausgelegt ist, jeweils mehrere Teilobjektformen und mehrere Teilobjekthöhen der mehreren Schichten von Teilobjekten (OB1, OB2, OB3, OB4, OB5, OB6) entsprechend dem Druckbereich (PR) und den Abtastparametern zu berechnen.

4. Dreidimensionale Druckvorrichtung (100, 200) nach Anspruch 3, wobei die Abtastparameter eine Vielzahl von Höhenwerten sind, und die Steuerung (110, 210) so konfiguriert ist, dass sie die Höhenwerte gemäß einer Neigungsformel und einem vorbestimmten Abstand berechnet, um eine Vielzahl von Höhendifferenzen zu erhalten, und dass sie die Teilobjektformen und die Teilobjekthöhen der mehreren Schichten von Teilobjekten (OB1, OB2, OB3, OB4, OB5, OB6) gemäß der Neigungsformel, dem vorbestimmten Abstand und den Höhendifferenzen bestimmt.

5. Dreidimensionale Druckvorrichtung (100, 200) nach Anspruch 3, wobei ein Bereich jeder Schicht von Teilobjekten der mehreren Schichten von Teilobjekten (OB1, OB2, OB3, OB4, OB5, OB6) schichtweise von einem ersten Schichtteilobjekt zu einem letzten Schichtteilobjekt vergrößert wird oder das letzte Schichtteilobjekt der mehreren Schichten von Teilobjekten (OB1, OB2, OB3, OB4, OB5, OB6) eine teilweise gefüllte Struktur ist.

6. Dreidimensionale Druckvorrichtung (100, 200) nach Anspruch 1, wobei der Druckbereich (PR) einen Rechteckbereich auf der Tragfläche (S1, S1') bildet und ein Bereich eines vom Druckkopf (120, 220) gemäß den ersten Schichtschneiddaten (SI) unter Steuerung durch die Steuerung (110, 210) bedruckten Schneidobjekts (SB) den Druckbereich (PR) nicht überschreitet.

7. Dreidimensionales Druckverfahren, angepasst an eine dreidimensionale Druckvorrichtung (100, 200), und umfassend:
Analyse einer ersten Schicht von Slicing-Daten (SI) eines dreidimensionalen Objekts, um einen Druckbereich (PR) zu erhalten;
Betreiben eines Sensors (121, 221), um eine Vielzahl von Abtastpunkten (D1, D2, D3, D4) entsprechend dem Druckbereich (PR) auf einer Trägerfläche (S1, S1') einer Druckplattform (130, 230) abzutasten, um eine Vielzahl von Abtastparametern entsprechend den Abtastpunkten (D1, D2, D3, D4) zu erhalten;
Bestimmen, ob die Druckplattform (130, 230) entsprechend den Sensorparametern geneigt ist;
wenn die Druckplattform (130, 230) geneigt ist, Bestimmen einer Objektform eines Kompensationsobjektes (OB) entsprechend dem Druckbereich (PR) und den Erfassungsparametern, und
Betätigen des Druckkopfes (120, 220) zum Vordrucken des Kompensationsobjektes (OB) auf der Auflagefläche (S1, S1') der Druckplattform (130, 230) vor dem Bedrucken des dreidimensionalen Objektes.

8. Dreidimensionales Druckverfahren nach Anspruch 7, wobei das Kompensationsobjekt (OB) auf der Tragfläche (S1, S1') eine horizontale Ebene (HB) bildet, und das dreidimensionale Druckverfahren weiter umfasst:
Betätigen des Druckkopfes (120, 220) zum Drucken des dreidimensionalen Objektes in der horizontalen Ebene (HB).

9. Dreidimensionales Druckverfahren nach Anspruch 7, wobei das Kompensationsobjekt (OB) durch aufeinanderfolgendes Stapeln mehrerer Schichten von Teilobjekten (OB1, OB2, OB3, OB4, OB5, OB6) gebildet wird und der Schritt der Bestimmung der Objektform des Kompensationsobjektes (OB) entsprechend dem Druckbereich (PR) und den Abtastparametern umfasst:
Berechnen jeweils einer Vielzahl von Teilobjektformen und einer Vielzahl von Teilobjekthöhen der mehrfachen Schichten von Teilobjekten (OB1, OB2, OB3, OB4, OB5, OB6) gemäß dem Druckbereich (PR) und den Abtastparametern.

10. Dreidimensionales Druckverfahren nach Anspruch 9, wobei die Abtastparameter eine Vielzahl von Höhenwerten sind und der Schritt der Berechnung der Unterobjektformen und der Unterobjekthöhen der mehreren Schichten von Unterobjekten (OB1, OB2, OB3, OB4, OB5, OB6) umfasst:
Berechnen der Höhenwerte gemäß einer Neigungsformel und einer vorgegebenen Steigung, um eine Vielzahl von Höhenunterschieden zu erhalten; und
Bestimmen der Teilobjektformen und der Teilobjekthöhen der mehrfachen Schichten von Teilobjekten (OB1, OB2, OB3, OB4, OB5, OB6) entsprechend der Steigungsformel, der vorgegebenen Teilung und der Höhenunterschiede.

11. Dreidimensionales Druckverfahren nach Anspruch 9, bei dem eine Fläche jeder Schicht von Teilobjekten der mehreren Schichten von Teilobjekten (OB1, OB2, OB3, OB4, OB5, OB6) schichtweise von einem ersten Schichtteilobjekt auf ein letztes Schichtteilobjekt vergrößert wird, oder das letzte Schichtteilobjekt der mehreren Schichten von Teilobjekten (OB1, OB2, OB3, OB4, OB5, OB6) eine teilweise gefüllte Struktur ist.

12. Dreidimensionales Druckverfahren nach Anspruch 7, wobei der Druckbereich (PR) einen Rechteckbereich auf der Tragfläche (S1, S1') bildet und ein Bereich eines durch den Druckkopf (120, 220) gemäß den Schneiddaten (SI) der ersten Schicht gedruckten geschnittenen Objekts (SB) den Druckbereich (PR) nicht überschreitet.

## Revendications

1. Dispositif d'impression tridimensionnelle (100, 200), comprenant :
une plate-forme d'impression (130, 230), comprenant une surface de support (S1, S1') ;
une tête d'impression (120, 220), disposée au-dessus de la plate-forme d'impression (130, 230) ;
un capteur (121, 221), disposé au-dessus de la plate-forme d'impression (130, 230) ; et
un dispositif de commande (110, 210), couplé à la tête d'impression (120, 220) et au capteur (121, 221),
le dispositif de commande (110, 210) étant configuré pour :
analyser des données de découpage de première couche (SI) d'un objet tridimensionnel pour obtenir une plage d'impression (PR), et actionner le capteur (121, 221) pour détecter une pluralité de points de détection (D1, D2, D3, D4) correspondant à la plage d'impression (PR) sur la surface de support (S1, S1') de la plate-forme d'impression (130, 230), de façon à obtenir une pluralité de paramètres de détection correspondant aux points de détection (D1, D2, D3, D4),
déterminer si la plate-forme d'impression (130, 230) est inclinée en fonction des paramètres de détection,
si la plate-forme d'impression (130, 230) est inclinée, déterminer une forme d'objet d'un objet de compensation (OB) en fonction de la plage d'impression (PR) et des paramètres de détection, et
actionner la tête d'impression (120, 220) pour pré-imprimer l'objet de compensation (OB) sur la surface de support (S1, S1') de la plate-forme d'impression (130, 230) avant d'imprimer l'objet tridimensionnel.

2. Dispositif d'impression tridimensionnelle (100, 200) selon la revendication 1, dans lequel l'objet de compensation (OB) forme un plan horizontal (HB) sur la surface de support (S1, S1'), et la tête d'impression (120, 220) est configurée pour imprimer l'objet tridimensionnel sur le plan horizontal (HB).

3. Dispositif d'impression tridimensionnelle (100, 200) selon la revendication 1, dans lequel l'objet de compensation (OB) est formé par empilement séquentiel de multiples couches de sous-objets (OB1, OB2, OB3, OB4, OB5, OB6), et le dispositif de commande (110, 210) est configuré pour calculer respectivement une pluralité de formes de sous-objet et une pluralité de hauteurs de sous-objet des multiples couches de sous-objets (OB1, OB2, OB3, OB4, OB5, OB6) en fonction de la plage d'impression (PR) et des paramètres de détection.

4. Dispositif d'impression tridimensionnelle (100, 200) selon la revendication 3, dans lequel les paramètres de détection sont une pluralité de valeurs de hauteur, et le dispositif de commande (110, 210) est configuré pour calculer les valeurs de hauteur en fonction d'une formule de pente et d'un pas prédéterminé pour obtenir une pluralité de différences de hauteur, et déterminer les formes de sous-objet et les hauteurs de sous-objet des multiples couches de sous-objets (OB1, OB2, OB3, OB4, OB5, OB6) en fonction de la formule de pente, du pas prédéterminé et des différences de hauteur.

5. Dispositif d'impression tridimensionnelle (100, 200) selon la revendication 3, dans lequel une aire de chaque couche de sous-objet des multiples couches de sous-objets (OB1, OB2, OB3, OB4, OB5, OB6) est accrue couche par couche d'un sous-objet de première couche à un sous-objet de dernière couche, ou le sous-objet de dernière couche des multiples couches de sous-objets (OB1, OB2, OB3, OB4, OB5, OB6) est une structure partiellement remplie.

6. Dispositif d'impression tridimensionnelle (100, 200) selon la revendication 1, dans lequel la plage d'impression (PR) forme une région de rectangle sur la surface de support (S1, S1'), et une plage d'un objet découpé en tranches (SB) imprimé par la tête d'impression (120, 220) en fonction des données de découpage de première couche (SI) sous la commande du dispositif de commande (110, 210) ne dépasse pas la plage d'impression (PR).

7. Procédé d'impression tridimensionnelle, adapté à un dispositif d'impression tridimensionnelle (100, 200), et comprenant :
analyser des données de découpage de première couche (SI) d'un objet tridimensionnel pour obtenir une plage d'impression (PR) ;
actionner un capteur (121, 221) pour détecter une pluralité de points de détection (D1, D2, D3, D4) correspondant à la plage d'impression (PR) sur une surface de support (S1, S1') d'une plate-forme d'impression (130, 230), de façon à obtenir une pluralité de paramètres de détection correspondant aux points de détection (D1, D2, D3, D4) ;
déterminer si la plate-forme d'impression (130, 230) est inclinée en fonction des paramètres de détection ;
si la plate-forme d'impression (130, 230) est inclinée, déterminer une forme d'objet d'un objet de compensation (OB) en fonction de la plage d'impression (PR) et des paramètres de détection ; et
actionner la tête d'impression (120, 220) pour pré-imprimer l'objet de compensation (OB) sur la surface de support (S1, S1') de la plate-forme d'impression (130, 230) avant d'imprimer l'objet tridimensionnel.

8. Procédé d'impression tridimensionnelle selon la revendication 7, dans lequel l'objet de compensation (OB) forme un plan horizontal (HB) sur la surface de support (S1, S1'), et le procédé d'impression tridimensionnelle comprend en outre :
actionner la tête d'impression (120, 220) pour imprimer l'objet tridimensionnel sur le plan horizontal (HB) .

9. Procédé d'impression tridimensionnelle selon la revendication 7, dans lequel l'objet de compensation (OB) est formé par empilement séquentiel de multiples couches de sous-objets (OB1, OB2, OB3, OB4, OB5, OB6), et l'étape de détermination de la forme d'objet de l'objet de compensation (OB) en fonction de la plage d'impression (PR) et des paramètres de détection comprend :
calculer respectivement une pluralité de formes de sous-objet et une pluralité de hauteurs de sous-objet des multiples couches de sous-objets (OB1, OB2, OB3, OB4, OB5, OB6) en fonction de la plage d'impression (PR) et des paramètres de détection.

10. Procédé d'impression tridimensionnelle selon la revendication 9, dans lequel les paramètres de détection sont une pluralité de valeurs de hauteur, et l'étape de calcul des formes de sous-objet et des hauteurs de sous-objet des multiples couches de sous-objets (OB1, OB2, OB3, OB4, OB5, OB6) comprend :
calculer les valeurs de hauteur en fonction d'une formule de pente et d'un pas prédéterminé afin d'obtenir une pluralité de différences de hauteur ; et
déterminer les formes de sous-objet et les hauteurs de sous-objet des multiples couches de sous-objets (OB1, OB2, OB3, OB4, OB5, OB6) en fonction de la formule de pente, du pas prédéterminé et des différences de hauteur.

11. Procédé d'impression tridimensionnelle selon la revendication 9, dans lequel une aire de chaque couche de sous-objet des multiples couches de sous-objets (OB1, OB2, OB3, OB4, OB5, OB6) est accrue couche par couche d'un sous-objet de première couche à un sous-objet de dernière couche, ou le sous-objet de dernière couche des multiples couches de sous-objets (OB1, OB2, OB3, OB4, OB5, OB6) est une structure partiellement remplie.

12. Procédé d'impression tridimensionnelle selon la revendication 7, dans lequel la plage d'impression (PR) forme une région de rectangle sur la surface de support (S1, S1'), et une plage d'un objet découpé en tranches (SB) imprimé par la tête d'impression (120, 220) en fonction des données de découpage de première couche (SI) ne dépasse pas la plage d'impression (PR).
